(19) Europäisches Patentamt
European Patent Office
Office européen des brevets

(11) **EP 2 293 932 B1**

(12) **EUROPÄISCHE PATENTSCHRIFT**

(45) Veröffentlichungstag und Bekanntmachung des Hinweises auf die Patenterteilung:
**28.02.2018 Patentblatt 2018/09**

(21) Anmeldenummer: **09765701.9**

(22) Anmeldetag: **20.05.2009**

(51) Int Cl.:
**B32B 5/14** *(2006.01)*   **F41H 5/04** *(2006.01)*

(86) Internationale Anmeldenummer:
**PCT/EP2009/056116**

(87) Internationale Veröffentlichungsnummer:
**WO 2009/153121 (23.12.2009 Gazette 2009/52)**

(54) **PENETRATIONSHEMMENDER ARTIKEL**

ANTI-PENETRATION ARTICLE

ARTICLE RETARDATEUR DE PÉNÉTRATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **26.05.2008 EP 08156914**

(43) Veröffentlichungstag der Anmeldung:
**16.03.2011 Patentblatt 2011/11**

(73) Patentinhaber: **Teijin Aramid GmbH**
**42103 Wuppertal (DE)**

(72) Erfinder:
 • **BÖTTGER, Christian**
  **42897 Remscheid (DE)**
 • **HARTERT, Rüdiger**
  **42287 Wuppertal (DE)**

(74) Vertreter: **Heimann, Anette**
**CPW GmbH**
**Kasinostrasse 19-21**
**42103 Wuppertal (DE)**

(56) Entgegenhaltungen:
**WO-A-02/14588     JP-A- 61 275 440**

**Beschreibung**

Die Erfindung betrifft einen penetrationshemmenden Artikel, umfassend Gewebelagen aus Garnen aus Fasern mit einer Bruchdehnung kleiner als 8% gemessen gemäß EN 12562.

Penetrationshemmende Artikel aus Gewebelagen sind allgemein bekannt. In der Druckschrift JP 612 75 440 A wird eine schusshemmende Weste aus Gewebelagen offenbart, wobei die Garne in einer Atlasbindung vorliegen. Im Gegensatz beispielsweise zu Garnen in einer Leinwandbindung sind die Garne innerhalb einer Atlasbindung weniger stark innerhalb der Gewebelage fixiert. Hierdurch wird gemäß der Druckschrift JP 612 75 440 A die Energieabsorption bei einem Beschuss der Weste gegenüber der Energieabsorption einer Weste, die Gewebelagen in Leinwandbindung aufweist, verbessert. Nachteilig bei Gewebelagen mit einer Atlasbindung ist jedoch ihre schlechte Handhabbarkeit. Beispielsweise ist das Schneiden und das Aufeinanderlegen derartiger Gewebelagen bei der Herstellung eines penetrationshemmenden Gegenstandes sehr aufwändig.

In der Druckschrift WO 02/14588 A1 wird die Verwendung von laminierten Gewebelagen für geschosshemmende Gegenstände offenbart, wobei die Gewebelagen eine Atlasbindung aufweisen. Nachteilig bei der Verwendung von laminierten, atlasbindigen Gewebelagen ist jedoch, dass die Fähigkeit der offenen Atlasbindung zur hohen Energieabsorption durch das Laminieren verloren geht.

Weiterhin ist es nachteilig, dass atlasbindige Gewebelagen ein hohes Trauma bei Beschuss aufweisen. Atlasbindungen in antiballistisch wirksamen Geweben zeigen somit neben einer schlechten Handhabbarkeit der Gewebelagen auch schlechte Traumawerte.

Die Aufgabe der vorliegenden Erfindung ist es daher, einen penetrationshemmenden Artikel der eingangs genannten Art zur Verfügung zu stellen, der die Nachteile aus dem Stand der Technik zumindest vermeidet und mit dem trotzdem gute antiballistische Eigenschaften erzielt werden können.

Gelöst wird die Aufgabe mit einem penetrationshemmenden Artikel, umfassend eine Mehrzahl von Gewebelagen aus Garnen aus Fasern mit einer Bruchdehnung kleiner als 8% gemessen gemäß EN 12562, wobei innerhalb mindestens einer einzelnen Gewebelage mindestens zwei Gruppen von Bereichen vorliegen, wobei die Bereiche einer ersten Gruppe eine erste Gewebedichte DG1 nach Walz von 8% bis 80% aufweisen und wobei die Bereiche einer zweiten Gruppe eine zweite Gewebedichte DG2 nach Walz von 8% bis 80% aufweisen und wobei die Differenz zwischen DG1 und DG2 mindestens 3% beträgt.

Besonders bevorzugt umfasst der penetrationshemmende Artikel eine Mehrzahl von Gewebelagen aus Garnen aus Fasern mit einer Bruchdehnung kleiner als 5%, ganz besonders bevorzugt kleiner als 3,5 %, gemessen gemäß EN 12562.

Die Differenz von mindestens 3 % zwischen DG1 und DG2 soll als Betrag verstanden werden, so dass auch DG1 größer sein kann als DG2, ohne dass ein negativer Wert als Differenz entsteht.

Vorzugsweise beträgt die Gewebedichte DG1 8% bis 31 %, besonders bevorzugt 8% bis 25%, ganz besonders bevorzugt 8% bis 20%.

Weiterhin bevorzugt beträgt die Gewebedichte DG2 32% bis 80%, besonders bevorzugt 32% bis 70%, ganz besonders bevorzugt 32% bis 50%.

Die Gewebedichte nach Walz wird nach folgender Formel bestimmt:

$$DG = \left(d_k + d_s\right)^2 \times f_k \times f_s$$

Hierbei bedeuten:

$d_k$ = Substanzdurchmesser des Kettgarns in mm;
$d_s$ = Substanzdurchmesser des Schussgarns in mm;
$f_k$ = Kettfäden pro cm
$f_s$ = Schussfäden pro cm

Der Substanzdurchmesser $d_k$ beziehungsweise $d_s$ der Garne wird wie folgt berechnet:

$$d = \frac{\sqrt{Titer}}{88,5 \times \sqrt{Dichte}}$$

wobei d entweder $d_k$ oder $d_s$ bedeutet und der Titer des entsprechenden Garns in dtex und die Dichte des Garns in g/cm³ eingesetzt wird.

Die nach der Formel berechnete Gewebedichte gilt für Gewebe in Leinwandbindung. Liegen von der Leinwandbindung abweichende Bindungen vor, so muss ein Bindungs-Korrekturfaktor in die Berechnung einbezogen werden. Für diesen Bindungs-Korrekturfaktor werden beispielsweise bei Geweben mit speziellen Bindungsarten folgende Werte eingesetzt:

| | |
|---|---|
| Panamabindungen 2: 2 | 0,56 |
| Köperbindungen 2:1 | 0,70 |
| Köperbindungen 2:2 | 0,56 |
| Köperbindungen 3:1 | 0,56 |
| Köperbindungen 4:4 | 0,38 |
| Atlasbindung 1:4 | 0,49 |
| Atlasbindung 1:5 | 0,44 |

Mit diesen Korrekturfaktoren wird die gemäß der Formel errechnete Gewebedichte nach Walz DG multipliziert. Die Gewebedichte wird in % angegeben.

Durch die Bereiche mit unterschiedlichen Gewebedichten nach Walz innerhalb jeder Gewebelage ist es vorteilhaft möglich, die Vorzüge von hohen Gewebedichten oder niedrigen Gewebedichten ganz gezielt dort einzusetzen, wo sie innerhalb einer Gewebelage benötigt werden. Beispielsweise können Randbereiche einer Gewebelage mit einer vergleichsweise höheren Gewebedichte gebildet werden, als Bereiche in der Mitte der Gewebelage.

Die Bruchdehnung wird nach dem Standard EN 12562, in der gültigen Fassung vom 1999, ermittelt.

Wenn ungedrehte Multifilamentgarne untersucht werden, erfolgt eine Drehungserteilung der Garne wie in der Norm EN 12562 angegeben. Werden Garne mit Stapelfasern oder andere bereits gedrehte Garne für die Messung der Bruchdehnung verwendet, erfolgt die Ermittlung der Bruchdehnung im Wesentlichen synonym. Da die Stapelfasergarne oder die gedrehten Garne jedoch bereits schon eine Drehungserteilung aufweisen, entfällt die zusätzliche Drehungserteilung der Stapelfasergarne beziehungsweise der anderen gedrehten Garne.

Vorzugsweise weisen die Bereiche der ersten Gruppe eine erste Bindungsart auf, und die Bereiche der zweiten Gruppe weisen bevorzugt eine zweite Bindungsart auf. Besonders bevorzugt ist die erste Bindungsart von der zweiten Bindungsart verschieden. In vorteilhafter Weise kann somit die unterschiedliche Gewebedichte der Bereiche der ersten Gruppe gegenüber den Bereichen der zweiten Gruppe durch die unterschiedlichen Bindungsarten innerhalb der Bereiche der ersten Gruppe gegenüber den Bereichen der zweiten Gruppe erreicht werden. In vorteilhafter Weise können so - zum Beispiel trotz der Verwendung von Garnen mit gleichen Garntitern in beiden Bereichen - unterschiedliche Gewebedichten erzeugt werden.

Besonders bevorzugt weisen die Bereiche der ersten Gruppe als erste Bindungsart eine Atlasbindung auf. Vorzugsweise ist die Atlasbindung eine 1/5 oder eine 1/4 Atlasbindung.

Weiterhin besonders bevorzugt weisen die Bereiche der zweiten Gruppe als zweite Bindungsart eine Köperbindung oder eine 1/1 Leinwandbindung auf. Wenn die Atlasbindung in den Bereichen der ersten Gruppe eine 1/5 Bindung ist, ist die Köperbindung besonders bevorzugt eine 2/1 Bindung. Wenn in den Bereichen der ersten Gruppe eine 1/4 Atlasbindung vorliegt, weisen die Bereiche der zweiten Gruppe bevorzugt eine 2/3 oder eine 1/4 Köperbindung oder eine 1/1 Leinwandbindung auf.

Ebenfalls bevorzugt ist, wenn die Garne der Bereiche der ersten Gruppe einen ersten Garntiter aufweisen und die Bereiche der zweiten Gruppe einen zweiten Garntiter aufweisen. Besonders bevorzugt ist dabei der erste Garntiter von dem zweiten Garntiter verschieden. Es ist jedoch auch bevorzugt, wenn der erste Garntiter im Wesentlichen dem zweiten Garntiter entspricht. Bei der Verwendung von unterschiedlichen Garntitern innerhalb den Bereichen der ersten Gruppe gegenüber den Bereichen der zweiten Gruppe, kann ein Gewebedichteunterschied zwischen den Bereichen der ersten Gruppe und den Bereichen der zweiten Gruppe bewirkt werden, auch wenn in den Bereichen der ersten Gruppe und den Bereichen der zweiten Gruppe die gleiche Bindungsart verwendet wird. Der erste Garntiter und der zweite Garntiter können im Bereich von 100 dtex bis 8000 dtex liegen. Weisen die beiden Bereiche unterschiedliche Bindungsarten auf, so kann ein so hervorgerufener Gewebedichteunterschied jedoch durch die Verwendung von unterschiedlichen Garntitern bei den unterschiedlichen Bereichen vorteilhaft noch verstärkt werden.

Vorzugsweise weisen die Bereiche der ersten Gruppe einen Garntiter von 100 dtex bis 1000 dtex auf, und die Bereiche der zweiten Gruppe weisen vorzugsweise einen Garntiter von 1050 dtex bis 8000 dtex auf.

Weiterhin bevorzugt ist, wenn die Gewebelage in den Bereichen der ersten Gruppe eine erste Fadenzahl aufweist und in den Bereichen der zweiten Gruppe eine zweite Fadenzahl aufweist. Die erste Fadenzahl und die zweite Fadenzahl können gleich oder voneinander verschieden sein und im Bereich von 2 Fd/cm bis 50 Fd/cm liegen. Besonders bevorzugt weist die Gewebelage in den Bereichen der ersten Gruppe eine erste Fadenzahl von 2 Fd/cm bis 10 Fd/cm auf und in den Bereichen der zweiten Gruppe eine zweite Fadenzahl von 10,1 Fd/cm bis 50 Fd/cm.

Es soll deutlich werden, dass die Gewebedichten nach Walz in den Bereichen der ersten Gruppe und den Bereichen der zweiten Gruppe durch die Faktoren Bindungsart, Garntiter/-art und Fadenzahl beeinflusst werden können. Unterscheiden sich die Bereiche der ersten Gruppe gegenüber den Bereichen der zweiten Gruppe nur um einen dieser Faktoren, so kann bereits eine andere Gewebedichte nach Walz zwischen den Bereichen der ersten Gruppe und den Bereichen der zweiten Gruppe hervorgerufen werden. Selbstverständlich können sich die Bereiche der ersten Gruppe und die Bereiche der zweiten Gruppe auch bezüglich zwei oder aller Faktoren unterscheiden.

Ganz allgemein können die Gewebelagen beziehungsweise eine Gewebelage zur Bildung des erfindungsgemäßen Artikels unabhängig von den vorliegenden Bindungen oder Fadenzahlen in den Bereichen der ersten Gruppe und den Bereichen der zweiten Gruppe Garne mit einem Garntiter von etwa 100 dtex bis etwa 8000 dtex aufweisen. Weiterhin können die Gewebelagen beziehungsweise eine Gewebelage zur Bildung des erfindungsgemäßen Artikels unabhängig von den vorliegenden Bindungen oder Garntitern in den Bereichen der ersten Gruppe und den Bereichen der zweiten Gruppe eine Fadenzahl von 2 Fd/cm bis 50 Fd/cm aufweisen. Selbstverständlich können die Gewebelagen zur Bildung des erfindungsgemäßen Artikels unabhängig von den vorliegenden Fadenzahlen oder dem Garntitern in den Bereichen der ersten Gruppe und in den Bereichen der zweiten Gruppe eine Leinwandbindung oder eine Köperbindung oder eine Atlasbindung aufweisen.

Bevorzugt bilden die Bereiche der zweiten Gruppe einen Flächenanteil von mindestens 20% und höchstens 80% der Gesamtfläche der Gewebelage. Besonders bevorzugt beträgt der Flächenanteil der Bereiche der zweiten Gruppe zwischen 30% und 60%, ganz besonders bevorzugt zwischen 40% und 50%, der Gesamtfläche der Gewebelage. Die Bereiche der zweiten Gruppe sollten bevorzugt nicht zusammenhängend innerhalb der Gewebelage ausgeführt sein. Bevorzugt ist vielmehr, dass die Gewebelage eine Vielzahl von Bereichen der zweiten Gruppe aufweist, wobei die Bereiche der zweiten Gruppe beispielsweise durch eine Mehrzahl von Bereichen der ersten Gruppe voneinander getrennt sind, aber trotzdem Berührungspunkte zwischen den Bereichen der zweiten Gruppe zueinander bestehen. Folglich kann auch eine Mehrzahl von nicht zusammenhängenden Bereichen der ersten Gruppe innerhalb einer Gewebelage vorliegen. Weiterhin ist es auch möglich, dass innerhalb der Gewebelage mehr als zwei Gruppen von Bereichen mit unterschiedlichen Gewebedichten nach Walz vorliegen. Die Bereiche der ersten Gruppe und die Bereiche der zweiten Gruppe erstrecken sich jeweils bevorzugt über mindestens einen Rapport der gewählten Bindung.

Bevorzugt sind die Bereiche der ersten Gruppe und die Bereiche der zweiten Gruppe zueinander in einem Streifenmuster oder in einem Schachbrettmuster angeordnet. Selbstverständlich sind auch andere Muster, wie beispielsweise ein Rautenmuster oder ein Dreiecksmuster, möglich. Weiterhin ist auch möglich, dass sich Bereiche der ersten oder der zweiten Gruppe vorwiegend im Randbereich der Gewebelage (beispielsweise Fensterrahmen ähnlich) und die Bereiche der jeweils anderen Gruppe im Zentralbereich der Gewebelage befinden. Bei zwei aufeinander folgenden Gewebelagen des penetrationshemmenden Artikels können die aufeinander folgenden Gewebelagen im Wesentlichen gleich oder unterschiedlich zueinander aufgebaut sein. Bei einem ungleichen Aufbau beispielsweise kann eine erste Gewebelage im Randbereich Bereiche der ersten Gruppe und im Zentralbereich Bereiche der zweiten Gruppe aufweisen, wohingegen eine zweite Gewebelage im Randbereich Bereiche der zweiten und im Zentralbereich Bereiche der ersten Gruppe aufweist.

Vorzugsweise sind die Garne zur Bildung der Gewebelage des penetrationshemmenden Artikels Aramidgarne oder Garne aus Polyethylen mit einem ultra hohem Molekulargewicht oder aus Polypropylen mit ultra hohem Molekulargewicht oder aus Polybenzoxazol oder aus Polybenzothiazol. Insbesondere werden Garne aus Fasern aus Poly(p-Phenylenterephtalamid), wie sie beispielsweise unter der Bezeichnung TWARON® von der Firma Teijin Aramid GmbH vertrieben werden, bevorzugt. Selbstverständlich ist es auch möglich, dass innerhalb einer Gewebelage unterschiedliche Garne vorliegen, die zu einer partiellen Variation der Gewebedichte beitragen. Die Gewebelagen können sowohl aus Multifilamentgarnen als auch aus Stapelfasergarnen oder aus Mischungen beider Garntypen hergestellt werden. Bevorzugt weisen die Fasern der Garne eine Festigkeit größer als 900 MPa auf, besonders bevorzugt größer 1100 MPa, gemessen nach ASTM D - 885.

Der penetrationshemmende Artikel gemäß des Hauptanspruchs und den Ausführungsformen gemäß der Unteransprüche wird bevorzugt zur Herstellung von Schutzbekleidung, wie beispielsweise geschosshemmenden Schutzwesten, verwendet. Selbstverständlich kann der erfindungsgemäße Artikel durch eine entsprechende Ausgestaltung der Gewebelagen auch einen Stichschutz gewährleisten.

Zur Verdeutlichung wird die Erfindung anhand von zwei Figuren näher beschrieben.

Figur 1 stellt schematisch die Bindungspatrone einer Gewebelage zur Bildung des erfindungsgemäßen penetrationshemmenden Artikels dar.

Figur 2 stellt schematisch die Bindungspatrone einer Vergleichsgewebelage dar.

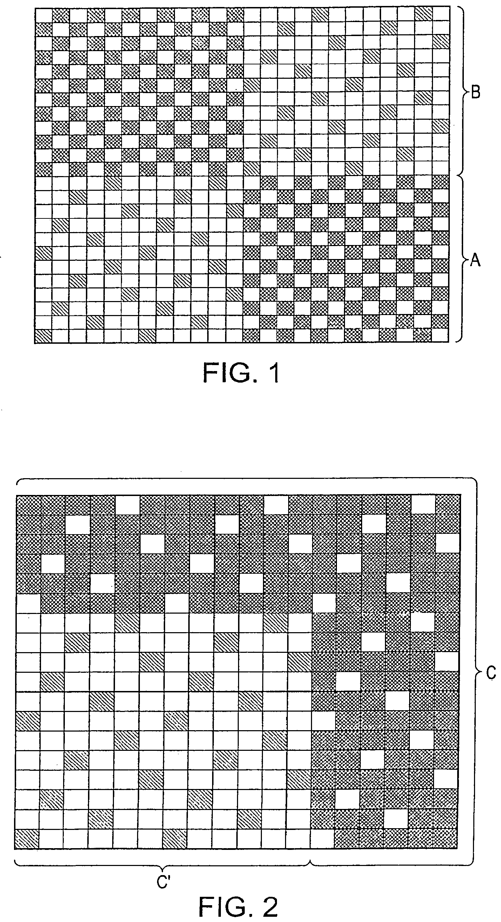

In der Figur 1 ist schematisch eine Bindungspatrone einer Gewebelage zur Herstellung des erfindungsgemäßen Artikels dargestellt. In den Bereichen A weist die Gewebelage eine Leinwandbindung 1/1 mit einer Gewebedichte nach Walz von beispielsweise 37% auf. In den Bereichen B weist die Gewebelage eine Atlasbindung 1/5 (Steigungszahl 2,2,3,4,4) auf, wobei die Gewebedichte nach Walz beispielsweise 16% betragen kann. Die Bereiche B sind somit erfindungsgemäße Bereiche einer ersten Gruppe und liegen in einer Schachbrettmusteranordnung mit den Bereichen A, die Bereiche einer zweiten Gruppe darstellen. Die in der Figur 1 dargestellte Bindungspatrone weisen die Gewebelagen auf, aus denen für die nachfolgenden Beschussversuche das Paket gemäß Beispiel 1 gebildet wird.

In der Figur 2 ist schematisch die Bindungspatrone eines Gewebes aus Atlasbindung mit entsprechendem Negativ dargestellt. In den dargestellten Bereichen C weist die Gewebelage eine 5/1 Atlasbindung (Steigungszahl 2,2,3,4,4) auf, wohingegen die Bereiche C' eine 1/5 Atlasbindung (Steigungszahl 2,2,3,4,4) aufweisen. Trotz unterschiedlichen Bindungsarten in den Bereichen C und C' beträgt die Gewebedichte nach Walz in beiden Bereichen beispielsweise 16%. Im Ausführungsbeispiel der Figur 2 wurde der Atlas 1/5 (Bereiche C') mit zwei Rapporten und der Atlas 5/1 (Bereiche C) mit einem Rapport ausgeführt. Die in der Figur 2 dargestellte Bindungspatrone weisen die Gewebelagen auf, aus denen für die nachfolgenden Beschussversuche das Paket gemäß Vergleichsbeispiel 3 gebildet wird.

Beispiele

Die Garne zur Herstellung der Gewebelagen sind im Beispiel und in den Vergleichsbeispielen Aramid Filamentgarne mit einer Festigkeit von 3384 MPa nach ASTM - D885 und einem effektiven Titer von 960dtex, die von der Firma Teijin Aramid GmbH unter der Bezeichnung TWARON ® 930dtex f1000 verkauft werden. Die verwendeten Aramid Filamentgarne weisen eine Bruchdehnung von 3,45%, gemessen nach EN 12562, auf. Aramid weist eine Dichte von 1, 44 g/cm$^3$ auf.

Es werden eine Mehrzahl von Paketen, gebildet aus jeweils einer Mehrzahl von Gewebelagen, untersucht.

Vergleichsbeispiel 1

Der Artikel - beziehungsweise das Paket - gemäß Vergleichsbeispiel 1 besteht aus 26 aufeinander gelegten Gewebelagen, wobei jede Gewebelage eine Leinwandbindung 1/1 und eine Fadenzahl (Fd) von 10,5 1/cm x 10,5 1/cm aufweist. Die Gewebedichte nach Walz beträgt für jede dieser Gewebelagen 37%.

Vergleichsbeispiel 2

Das Paket gemäß Vergleichsbeispiel 2 wird ebenfalls aus 26 Gewebelagen gebildet, wobei jedoch jede Gewebelage eine Atlasbindung 1/5 (Steigungszahl 2,2,3,4,4) aufweist. Die Fadenzahl beträgt 10,5 1/cm x 10,5 1/cm. Die Gewebedichte nach Walz beträgt für jede dieser Gewebelagen 16%.

Beispiel 1

Der erfindungsgemäße Artikel gemäß Beispiel 1 besteht aus 26 Gewebelagen, mit zwei Gruppen von Bereichen mit unterschiedlichen Gewebedichten. Jede Gewebelage zur Bildung des erfindungsgemäßen Artikels weist als Bereiche der ersten Gruppe Bereiche mit einer Atlasbindung 1/5 (Steigungszahl 2,2,3,4,4) und einer Fadenzahl von 10,5 1/cm x 10,5 1/cm auf. Die Gewebedichte nach Walz beträgt für die Bereiche dieser ersten Gruppe 16%. Die Bereiche einer zweiten Gruppe werden durch Bereiche innerhalb der Gewebelage mit einer Leinwandbindung 1/1 mit einer Fadenzahl von 10,5 1/cm x 10,5 1/cm gebildet. Die Gewebedichte nach Walz beträgt für die Bereiche dieser zweiten Gruppe 37%. Das Verhältnis zwischen den Bereichen in Leinwandbindung zu den Bereichen in Atlasbindung ist 1:1, wobei zwei Rapporte Atlas in Kett- und Schussrichtung und sechs Rapporte Leinwand in Kett- und Schussrichtung vorliegen. Die Gewebedichte nach Walz wurde wie folgt nach der bereits genannten Formel berechnet:

$$DG_{\text{[zweite Gruppe Leinwand1/1; 960 dtex; 10,5 X 10,5 1/cm]}} = 37\%$$

$$DG_{\text{[erste Gruppe Atlas 1/5; 960 dtex;10,5 X 10,5 1/cm]}} = 37\% \times 0{,}44 \text{ (Korrekturfaktor)} = 16\%$$

Die Gewebelagen des erfindungsgemäßen Artikels werden durch Zuführung in Fadengruppen als Schaftware auf einer Greiferwebermaschine mit Schaftmaschine hergestellt. Zur Herstellung sind sechs Schäfte für die Zuführung der Garne zur Herstellung der Bereiche in Leinwandbindung und sechs Schäfte für die Zuführung der Garne zur Herstellung der Bereiche in Atlasbindung erforderlich.

Vergleichsbeispiel 3

Das Paket gemäß des Vergleichsbeispiels 3 weist 26 Gewebelagen auf. Die Gewebelagen werden mit der zu Beispiel 1 beschriebenen Methode so hergestellt, dass jede Gewebelage zwei unterschiedliche Gewebebindungen aufweist. Die Gewebedichte nach Walz ist jedoch innerhalb der Gewebelage trotz unterschiedlicher Gewebebindungen gleich. Als Gewebebindungen werden eine Atlasbindung 1/5 (Steigungszahl 2,2,3,4,4) und eine Atlasbindung 5/1 (Steigungszahl 2,2,3,4,4) verwendet, die Gewebedichte nach Walz beträgt in allen Bereichen 16%.

Vergleich der ballistischen Leistung

Zu jedem der Vergleichsbeispiele 1 bis 3 und zu Beispiel 1 wurden jeweils drei Pakete pro Munitionsart getestet, wobei jedes Paket ($\sim$5,2 kg/m$^2$) jeweils 26 Gewebelagen aufwies und mit der jeweiligen Munitionsart achtmal aus einem Abstand von 10 m zur Ermittlung des $V_{50}$-Wertes und der absorbierten Energie beschossen wurde. Der $V_{50}$-Wert bedeutet dabei, dass bei der angegebenen Geschossgeschwindigkeit eine Penetrationswahrscheinlichkeit von 50 % besteht. Hinter den Paketen wurde jeweils ein Weible Plastilinblock angeordnet. Die Energieabsorption berechnet sich dabei aus ½ mv$^2$, wobei m dem Geschossgewicht in kg und v der ermittelten $v_{50}$-Geschwindigkeit in m/s entspricht.
In einer zweiten Untersuchung zur Überprüfung der Hintergrunddeformation (im weiteren als Trauma bezeichnet) wurde, wie zuvor, ein Weible Plastilinblock verwendet. Ein Maß für das Trauma stellt bekanntlich die Auswölbung der der Bedrohungsseite (Beschussseite) abgewandten Seite dar, die durch einen Beschuss hervorgerufen wird. Zur Bestimmung des Traumas wurde jedes Paket vor dem Weible Plastilinblock angeordnet und mit einer etwa konstanten Geschossgeschwindigkeit im Bereich von 434 m/s bis 443 m/s aus einem Abstand von 5 m achtmal beschossen. Vier Schüsse wurden dabei auf den äußeren Bereich der Pakete und vier Schüsse auf den inneren Bereich der Pakete gerichtet. Bei den gewählten Geschossgeschwindigkeiten resultierten keine Durchschüsse, sondern nur Steckschüsse. Aus diesen acht Schüssen wurde pro Aufbau und Munitionsart der Mittelwert für das Trauma als Eindringtiefe in mm in das Plastilin berechnet.
Die jeweiligen Mittelwerte der Ergebnisse der Beschussversuche sind in den Tabellen 1 und 2 zusammengefasst.

Beschussversuch 1

Beschuss mit 0.44 Magnum JHP Remington 15,6 g

Tabelle: 1

|  | $V_{50}$ (m/s) | Energieabsorption (J) | Trauma (mm) |
|---|---|---|---|
| Vergleichsbeispiel 1 | 488 | 1858 | 50 |
| Vergleichsbeispiel 2 | 493 | 1896 | 59 |
| Vergleichsbeispiel 3 | 492 | 1888 | 57 |
| Beispiel 1 | 497 | 1927 | 54 |

Wie in der Tabelle 1 dargestellt weist das Paket, aufgebaut gemäß des Vergleichsbeispiels 2 (Atlasbindung), bei Beschuss mit 0.44 Magnum einen $V_{50}$ - Wert von 493 m/s und entsprechend eine Energieabsorption von 1896 J auf. Allerdings beträgt das Trauma bei dem Beschuss eines solchen Paketes 59 mm. Das Paket aus dem Vergleichsbeispiel 1 (Leinwandbindung) weist hingegen bei dem Beschuss einen $V_{50}$ - Wert von 488 m/s und eine Energieabsorption von 1858 J auf. Das Trauma beträgt in diesem Fall nur 50 mm. Folglich zeichnet sich das offene Atlasgewebe (Vergleichsbeispiel 2) durch eine hohe Energieabsorption gegenüber dem Leinwandgewebe (Vergleichsbeispiel 1) aus, ist aber bezüglich des Traumas deutlich schlechter als ein Leinwandgewebe. Der erfindungsgemäße Artikel (Beispiel 1) hat einen $V_{50}$-Wert von 497 m/s, der einer Energieabsorption von 1927 J entspricht. Das Trauma für das Paket gemäß Beispiel 1 beträgt 54 mm. Für einen Fachmann überaus überraschend und nicht vorherzusehen zeigt der erfindungsgemäße Artikel gegenüber einem Paket aus reinen Atlasgewebelagen sogar eine Erhöhung der Energieabsorption und somit eine Verbesserung der antiballistischen Eigenschaften. Weiterhin völlig überraschend ist der Wert des Traumas bei dem Paket gemäß Beispiel 1 zwar geringfügig größer als der Wert des Traumas bei einem Paket gemäß Vergleichsbeispiel 1, aber gegenüber dem Trauma bei einem Paket gemäß Vergleichsbeispiel 2 wird eine deutliche Verbesserung erreicht. Bei einem Vergleich der Pakete gemäß des Vergleichsbeispiels 3 und dem Beispiel 1 kann zudem überraschend festgestellt werden, dass nicht das Vorliegen von unterschiedlichen Bindungsarten innerhalb einer Gewebelage zu einer Verbesserung der Energieabsorption und des Traumas führt, sondern dass auch unterschiedliche Gewebedichten bei den verschiedenen Bindungsarten vorliegen müssen. Bei der Kombination aus Leinwandbindung und Atlasbindung innerhalb einer Gewebelage (Beispiel 1) konnte in überraschender Weise die gute antiballistische Eigenschaft eines Atlasgewebes mit der Stabilität eines Leinwandgewebes kombiniert werden. Eine so hergestellte Gewebelage weist gegenüber einem reinen Leinwandgewebe eine bessere Energieabsorption bei Beschuss auf und gegenüber einem reinen Atlasgewebe ein verbessertes Traumaverhalten sowie eine deutlich verbesserte Handhabbarkeit.

Beschussversuch 2

Beschuss mit 0.357 Magnum JSP Remington 10,2 g

Tabelle 2:

|  | $V_{50}$ (m/s) | Energieabsorption (J) | Trauma (mm) |
|---|---|---|---|
| Vergleichsbeispiel 1 | 505 | 1301 | 37 |
| Vergleichsbeispiel 2 | 526 | 1411 | 46 |
| Beispiel 1 | 513 | 1342 | 41 |

Gemäß der Tabelle 2 liegt die Energieabsorption eines Pakets mit reinen Atlasgewebelagen (Vergleichsbeispiel 2) bei einem Beschuss mit 0.357 Magnum leicht über der Energieabsorption des erfindungsgemäßen Artikels (Beispiel 1), wobei jedoch das Trauma bei der Verwendung des erfindungsgemäßen Artikels deutlich unter dem Trauma liegt, das bei dem Beschuss eines Paketes mit reinen Atlasgewebelagen entsteht.

**Patentansprüche**

1.    Penetrationshemmender Artikel umfassend Gewebelagen aus Garnen mit einer Bruchdehnung kleiner als 8% gemessen gemäß EN 12562, **dadurch gekennzeichnet, dass** innerhalb mindestens einer einzelnen Gewebelage mindestens zwei Gruppen von Bereichen vorliegen, wobei die Bereiche einer ersten Gruppe eine erste Gewebedichte DG1 nach Walz von 8% bis 80% aufweisen und wobei die Bereiche einer zweiten Gruppe eine zweite Gewebedichte DG2 nach Walz von 8% bis 80% aufweisen und wobei die Differenz zwischen DG1 und DG2 mindestens 3% beträgt.

2.    Penetrationshemmender Artikel nach Anspruch 1, **dadurch gekennzeichnet, dass** die erste Gewebedichte DG1 8% bis 31% beträgt und die zweite Gewebedichte DG2 32% bis 80% beträgt.

3.    Penetrationshemmender Artikel nach Anspruch 1, **dadurch gekennzeichnet, dass** die erste Gewebedichte DG1 8% bis 25% beträgt und die zweite Gewebedichte DG2 32% bis 70% beträgt.

4.    Penetrationshemmender Artikel nach Anspruch 1, **dadurch gekennzeichnet, dass** die erste Gewebedichte DG1 8% bis 20% beträgt und die zweite Gewebedichte DG2 32% bis 50% beträgt.

5.    Penetrationshemmender Artikel nach einem oder mehreren der Ansprüche 1 bis 4, **dadurch gekennzeichnet, dass** die Bereiche der ersten Gruppe eine erste Bindungsart aufweisen und die Bereiche der zweiten Gruppe eine zweite Bindungsart aufweisen, und dass die erste und die zweite Bindungsart voneinander verschieden sind.

6.    Penetrationshemmender Artikel nach Anspruch 5, **dadurch gekennzeichnet, dass** die erste Bindungsart eine Atlasbindung ist.

7.    Penetrationshemmender Artikel nach Anspruch 5, **dadurch gekennzeichnet, dass** die zweite Bindungsart eine Leinwandbindung oder eine Köperbindung ist.

8.    Penetrationshemmender Artikel nach Anspruch 7, **dadurch gekennzeichnet, dass** die Köperbindung eine 2/1 Köperbindung oder eine 1/4 Köperbindung ist und die Leinwandbindung eine 1/1 Leinwandbindung ist.

9.    Penetrationshemmender Artikel nach einem oder mehreren der Ansprüche 1 bis 4, **dadurch gekennzeichnet, dass** die Garne der Bereiche der ersten Gruppe einen ersten Garntiter aufweisen und die Garne der Bereiche der zweiten Gruppe einen zweiten Garntiter aufweisen, und dass der erste und der zweite Garntiter innerhalb einer Gewebelage voneinander verschieden sind.

10. Penetrationshemmender Artikel nach einem oder mehreren der Ansprüche 1 bis 8, **dadurch gekennzeichnet, dass** die Garne der Bereiche der ersten Gruppe einen ersten Garntiter aufweisen und die Garne der Bereiche der zweiten Gruppe einen zweiten Garntiter aufweisen, und dass der erste und der zweite Garntiter innerhalb einer Gewebelage gleich oder voneinander verschieden sind.

11. Penetrationshemmender Artikel nach Anspruch 9 oder 10, **dadurch gekennzeichnet, dass** der erste Garntiter und der zweite Garntiter im Bereich von 100 dtex bis 8000 dtex liegen.

12. Penetrationshemmender Artikel nach Anspruch 9, 10 oder 11, **dadurch gekennzeichnet, dass** der erste Garntiter 100 dtex bis 1000 dtex beträgt und der zweite Garntiter 1050 dtex bis 8000 dtex beträgt.

13. Penetrationshemmender Artikel nach einem oder mehreren der Ansprüche 1 bis 4, **dadurch gekennzeichnet, dass** die Bereiche der ersten Gruppe eine erste Fadenzahl aufweisen und die Bereiche der zweiten Gruppe eine zweite Fadenzahl aufweisen, und dass die erste und die zweite Fadenzahl innerhalb einer Gewebelage voneinander verschieden sind.

14. Penetrationshemmender Artikel nach einem oder mehreren der Ansprüche 1 bis 12, **dadurch gekennzeichnet, dass** die Bereiche der ersten Gruppe eine erste Fadenzahl aufweisen und die Bereiche der zweiten Gruppe eine zweite Fadenzahl aufweisen, und dass die erste und die zweite Fadenzahl innerhalb einer Gewebelage gleich oder voneinander verschieden sind.

15. Penetrationshemmender Artikel nach Anspruch 13 oder 14, **dadurch gekennzeichnet, dass** die erste Fadenzahl und die zweite Fadenzahl im Bereich von 2 Fd/cm bis 50 Fd/cm liegen.

16. Penetrationshemmender Artikel nach Anspruch 13, 14 oder 15, **dadurch gekennzeichnet, dass** die Bereiche der ersten Gruppe eine Fadenzahl von 2 Fd/cm bis 10 Fd/cm aufweisen und die Bereiche der zweiten Gruppe eine Fadenzahl von 10,1 Fd/cm bis 50 Fd/cm aufweisen.

17. Penetrationshemmender Artikel nach einem oder mehreren der Ansprüche 1 bis 16, **dadurch gekennzeichnet, dass** die Bereiche der zweiten Gruppe einen Flächenanteil von mindestens 20% und höchstens 80% der Gesamtfläche einer Gewebelage aufweisen.

18. Penetrationshemmender Artikel nach einem oder mehreren der Ansprüche 1 bis 17, **dadurch gekennzeichnet, dass** die Garne Aramidgarne sind oder Garne aus Polyethylen mit einem ultra hohem Molekulargewicht oder Polypropylen mit ultra hohem Molekulargewicht oder Polybenzoxazol oder Polybenzothiazol.

19. Penetrationshemmender Artikel nach einem oder mehreren der Ansprüche 1 bis 18, **dadurch gekennzeichnet, dass** die Fasern der Garne eine Festigkeit von größer als 900 MPa nach ASTM-D885 aufweisen.

20. Verwendung des penetrationshemmenden Artikels gemäß einem oder mehreren der Ansprüche 1 bis 19, zur Herstellung von Schutzbekleidung.

## Claims

1. Penetration-obstructing article comprising layers of fabric with yarns having elongation at break less than 8% as measured according to EN 12562, **characterized in that** there are at least two groups of regions within at least a single fabric layer, with the regions of a first group having a first fabric density DG1 according to Walz of 8% to 80%, and with the regions of a second group having a second fabric density DG2 according to Walz of 8% to 80% and with the difference between DG1 and DG2 at least 3%.

2. Penetration-obstructing article according to Claim 1, wherein the first fabric density DG1 is 8% to 31% and the second fabric density DG2 is 32% to 80%.

3. Penetration-obstructing article according to Claim 1 wherein the first fabric density DG1 is 8% to 25% and the second fabric density DG2 is 32% to 70%.

4. Penetration-obstructing article according to Claim 1 wherein the first fabric density DG1 is 8% to 20% and the second fabric density DG2 is 32% to 50%.

5. Penetration-obstructing article according to one or more of Claims 1 to 4 wherein the regions of the first group have a first weave type and the regions of the second group have a second weave type, and wherein the first and second weave types are different from each other.

6. Penetration-obstructing article according to Claim 5 wherein the first weave type is a satin weave.

7. Penetration-obstructing article according to Claim 5, wherein the second weave type is a plain weave or a twill weave.

8. Penetration-obstructing article according to Claim 7, wherein the twill weave is a 2/1 twill weave or a 1/4 twill weave and the plain weave is a 1/1 plain weave.

9. Penetration-obstructing article according to one or more of Claims 1 to 4 wherein the yarns in the regions of the first group have a first yarn titer and the yarns in the regions of the second group have a second yarn titer, and wherein the first and second yarn titers within a fabric layer are different from each other.

10. Penetration-obstructing article according to one or more of Claims 1 to 8, wherein the yarns of the region of the first group have a first yarn titer and the yarns of the region of the second group have a second yarn titer, and wherein the first and second yarn titers within a fabric layer are the same or are different from each other.

11. Penetration-obstructing article according to Claim 9 or 10 wherein the first yarn titer and the second yarn titer are in the range from 100 dtex to 8,000 dtex.

12. Penetration-obstructing article according to Claim 9, 10 or 11, wherein the first yarn titer is from 100 dtex to 1,000 dtex and the second yarn titer is from 1,050 dtex to 8,000 dtex.

13. Penetration-obstructing article according to one or more of Claims 1 to 4, wherein the regions of the first group have a first thread count and the regions of the second group have a second thread count, and wherein the first and second thread counts within a fabric layer are different from each other.

14. Penetration-obstructing article according to one or more of Claims 1 to 12, wherein the regions of the first group have a first thread count and the regions of the second group have a second thread count, and wherein the first and second thread counts within a fabric layer are the same or are different from each other.

15. Penetration-obstructing article according to Claim 13 or 14, wherein the first thread count and the second thread count are in the range of 2 threads/cm to 50 threads/cm.

16. Penetration-obstructing article according to Claim 13, 14 or 15, wherein the regions of the first group have a thread count of 2 threads/cm to 10 threads/cm and the regions of the second group have a thread count of 10.1 threads/cm to 50 threads/cm.

17. Penetration-obstructing article according to one or more of Claims 1 to 16, wherein the regions of the second group cover a surface proportion of at least 20% and at most 80% of the total surface of a fabric layer.

18. Penetration-obstructing article according to one or more of Claims 1 to 17, wherein the yarns are aramid yarns or polyethylene yarns with an ultra-high molecular weight or polypropylene yarns with an ultra-high molecular weight or polybenzoxazole or polybenzothiazole yarns.

19. Penetration-obstructing article according to one or more of Claims 1 to 18, wherein the fibers of the yarn have a strength greater than 900 MPa according to ASTM D885.

20. Use of the penetration-obstructing article according to one or more of Claims 1 to 19 to produce protective clothing.

**Revendications**

1. Article retardateur de pénétration comprenant des couches de tissus constitués de fils dotés d'un allongement à la rupture inférieur à 8 %, mesuré selon la norme EN 12.562, **caractérisé en ce qu'**à l'intérieur d'au moins une couche de tissu considérée isolément sont présents au moins deux groupes de zones, les zones d'un premier groupe présentant une première densité de tissage DG1 selon Walz de 8 % à 80 % et les zones d'un deuxième groupe présentant une deuxième densité de tissage DG2 selon Walz de 8 % à 80 % et la différence entre DG1 et DG2 s'élevant à au moins 3%.

2. Article retardateur de pénétration selon la revendication 1 **caractérisé en ce que** la première densité de tissage DG1 est comprise entre 8 % et 31 % et **en ce que** la deuxième densité de tissage DG2 est comprise entre 32 % et 80 %.

3. Article retardateur de pénétration selon la revendication 1 **caractérisé en ce que** la première densité de tissage DG1 est comprise entre 8 % et 25 % et **en ce que** la deuxième densité de tissage DG2 est comprise entre 32 % et 70 %.

4. Article retardateur de pénétration selon la revendication 1 **caractérisé en ce que** la première densité de tissage DG1 est comprise entre 8 % et 20 % et **en ce que** la deuxième densité de tissage DG2 est comprise entre 32 % et 50 %.

5. Article retardateur de pénétration selon une ou plusieurs des revendications 1 à 4 **caractérisé en ce que** les zones du premier groupe présentent une première armure et **en ce que** les zones du deuxième groupe présentent une deuxième armure et **en ce que** la première armure et la deuxième armure sont différentes l'une de l'autre.

6. Article retardateur de pénétration selon la revendication 5 **caractérisé en ce que** la première armure est une armure satin.

7. Article retardateur de pénétration selon la revendication 5 **caractérisé en ce que** la deuxième armure est une armure toile ou une armure sergé.

8. Article retardateur de pénétration selon la revendication 7 **caractérisé en ce que** l'armure sergé est une armure sergé 2/1 ou une armure sergé 1/4 et **en ce que** l'armure toile est une armure toile 1/1.

9. Article retardateur de pénétration selon une ou plusieurs des revendications 1 à 4 **caractérisé en ce que** les fils des zones du premier groupe présentent un premier titre de fil et **en ce que** les fils des zones du deuxième groupe présentent un deuxième titre de fil et **en ce que** le premier titre de fil et le deuxième titre de fil présents à l'intérieur d'une couche de tissu sont différents l'un de l'autre.

10. Article retardateur de pénétration selon une ou plusieurs des revendications 1 à 8 **caractérisé en ce que** les fils des zones du premier groupe présentent un premier titre de fil et **en ce que** les fils des zones du deuxième groupe présentent un deuxième titre de fil et **en ce que** le premier titre de fil et le deuxième titre de fil présents à l'intérieur d'une couche de tissu sont égaux ou différents l'un de l'autre.

11. Article retardateur de pénétration selon la revendication 9 ou 10 **caractérisé en ce que** le premier titre de fil et le deuxième titre de fil se situent dans la plage comprise entre 100 dtex et 8000 dtex.

12. Article retardateur de pénétration selon la revendication 9, 10 ou 11 **caractérisé en ce que** le premier titre de fil est compris entre 100 dtex et 1000 dtex et **en ce que** le deuxième titre de fil est compris entre 1050 dtex et 8000 dtex.

13. Article retardateur de pénétration selon une ou plusieurs des revendications 1 à 4, **caractérisé en ce que** les zones du premier groupe présentent un premier nombre de fils et **en ce que** les zones du deuxième groupe présentent un deuxième nombre de fils et **en ce que** le premier nombre de fils et le deuxième nombre de fils, à l'intérieur d'une couche de tissu, sont différents l'un de l'autre.

14. Article retardateur de pénétration selon une ou plusieurs des revendications 1 à 12, **caractérisé en ce que** les zones du premier groupe présentent un premier nombre de fils et **en ce que** les zones du deuxième groupe présentent un deuxième nombre de fils et **en ce que** le premier nombre de fils et le deuxième nombre de fils, à l'intérieur d'une couche de tissu, sont égaux, ou différents l'un de l'autre.

15. Article retardateur de pénétration selon la revendication 13 ou 14 **caractérisé en ce que** le premier nombre de fils et le deuxième nombre de fils se situent dans la plage comprise entre 2 fils/cm et 50 fils/cm.

16. Article retardateur de pénétration selon la revendication 13, 14 ou 15 **caractérisé en ce que** les zones du premier groupe présentent un nombre de fils compris entre 2 fils/cm et 10 fils/cm et **en ce que** les zones du deuxième groupe présentent un nombre de fils compris entre 10,1 fils/cm et 50 fils/cm.

17. Article retardateur de pénétration selon une ou plusieurs des revendications 1 à 16, **caractérisé en ce que** les zones du deuxième groupe présentent une proportion de surface d'au moins 20 %, et d'au plus 80 % de la surface totale d'une couche de tissu.

18. Article retardateur de pénétration selon une ou plusieurs des revendication 1 à 17, **caractérisé en ce que** les fils sont des fils d'aramide, ou des fils de polyéthylène d'un poids moléculaire ultra élevé ou de fils de polypropylène d'un poids moléculaire ultra élevé ou de polybenzoxazole ou de polybenzothiazole.

19. Article retardateur de pénétration selon une ou plusieurs des revendications 1 à 18, **caractérisé en ce que** les fibres des fils présentent une résistance à la traction supérieure à 900 MPa selon la norme ASTM-D885.

20. Utilisation de l'article retardateur de pénétration selon une ou plusieurs des revendications 1 à 19, pour la fabrication de vêtements de protection.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 61275440 A
- WO 0214588 A1